# EUROPÄISCHE PATENTANMELDUNG

(11) **EP 2 230 151 A2**
(43) Veröffentlichungstag der Anmeldung: **22.09.2010**
(21) Anmeldenummer: 09015271.1
(22) Anmeldetag: 10.12.2009
(51) Int. Cl.: B62B 5/02

(54) **Transportvorrichtung mit motorisch angetriebener Treppensteigvorrichtung**

(30) Priorität: 21.03.2009 DE 102009014326
(71) Anmelder: AAT Alber Antriebstechnik GmbH, 72458 Albstadt (DE)
(72) Erfinder:
(74) Vertreter: Kohler Schmid Möbus

(57) **Zusammenfassung**

An einer Transportvorrichtung (10) mit Laufrädern (16, 18) und einem Gestell (12) zur Aufnahme von Lasten wird über zumindest einen motorisch angetriebenen Kurbelarm (36), der einenends drehfest unmittelbar mit einer Antriebsachse (66) eines motorischen Antriebs (34) verbunden ist und anderenends drehbar an zumindest ein Steigbein (28) angelenkt ist, das Steigbein (28) bewegt. Bei einer Drehbewegung des Kurbelarms (36) wird das Steigbein (28) linear geführt bewegt, wodurch die Transportvorrichtung (10) eine Treppe (42) auf- oder absteigen kann. Dabei sitzt das Steigbein (28) mit seinem Fußende (56) auf dem Boden oder der Treppe (42) bzw. einer Trittstufe (44) auf. An einem dem Fußende (56) entgegengesetzten Ende bzw. Endbereich (60) ist das Steigbein (28) an einem an dem Gestell (12) vorgesehenen Führungsabschnitt (26) drehbar gelagert und linear verfahrbar.

## Beschreibung

Die Erfindung betrifft eine Transportvorrichtung umfassend ein Gestell zur Aufnahme von Lasten, am Gestell angeordnete Laufräder und eine motorisch angetriebene Treppensteigeinrichtung, wobei die Treppensteigeinrichtung zumindest ein Steigbein und zumindest einen motorisch angetriebenen Kurbelarm, der einenends drehfest unmittelbar mit einer Antriebsachse eines motorischen Antriebs verbunden ist und anderenends drehbar an das zumindest eine Steigbein angelenkt ist, aufweist.

Eine derartige Transportvorrichtung, wie sie beispielsweise aus der DE 10 2006 020 313 A1 bekannt geworden ist, dient einer Überwindung von Treppenstufen und kann sowohl zum Transport von Stückgütern und Tieren als auch zur Beförderung von insbesondere gehbehinderten Personen eingesetzt werden. Bei der bekannten Transportvorrichtung ist das Steigbein aus einem ersten Teleskopteil und einem zweiten Teleskopteil gebildet, wobei die beiden Teleskopteile über einen ersten Kurbelarm bzw. Exzenterhebel und einen zweiten Kurbelarm bzw. Exzenterhebel angetrieben werden. Alternativ kann das Steigbein einstückig ausgebildet sein und über die beiden Kurbelarme bewegbar sein. Die Kurbelarme werden mit einem einzigen Motor angetrieben und sind über einen Kettenantrieb miteinander verbunden, d. h. ihre Bewegung ist synchronisiert.

Eine weitere Transportvorrichtung ist aus der DE 197 45 153 C2 bekannt geworden. Der Elektromotor der Treppensteigeinrichtung dieser bekannten Transportvorrichtung treibt eine Welle an, an deren Enden erste Exzenterhebel befestigt sind, an denen jeweils zweite Exzenterhebel drehbar gelagert sind, die wiederum mit ihren Enden an Steigbeinen drehbar gelagert sind. Dabei sind die Steigbeine linear an der Transportvorrichtung geführt und zwischen den ersten und zweiten Exzenterhebeln sind Räderkoppelgetriebe mit einem Übersetzungsverhältnis von 1:2 angeordnet. Die Getriebe mit einem Übersetzungsverhältnis von 1:2 bewirken, dass bei einer Drehung der ersten Exzenterhebel um 90° die zweiten Exzenterhebel eine Drehung um 180° durchführen, wodurch eine verringerte horizontale Bewegungskomponente im Vergleich zu einem Übersetzungsverhältnis von 1:1 erreicht wird. Die geringere Horizontalbewegung der Steigbeine macht sich für eine Bedienperson der Transportvorrichtung durch eine Reduzierung der Lastveränderung an Handgriffen der Transportvorrichtung bemerkbar.

Der Erfindung liegt die Aufgabe zugrunde, ohne Einschränkung der Funktionalität und Flexibilität der Treppensteigeinrichtung deren Konstruktion zu vereinfachen und einen möglichst störungsfreien Bewegungsablauf während eines Treppensteigvorgangs sicherzustellen.

Diese Aufgabe wird erfindungsgemäß durch eine Transportvorrichtung der eingangs beschriebenen Art gelöst, bei der das zumindest eine Steigbein in einem einem Fußende entgegengesetzten Endbereich an einem an dem Gestell vorgesehenen Führungsabschnitt drehbar gelagert und linear verfahrbar ist. Bei der erfindungsgemäßen Transportvorrichtung wird das Steigbein über einen einzigen Kurbelarm bzw. Exzenterhebel angetrieben. Somit kann auf einen zweiten Kurbelarm und auf einen die beiden verbindenden Kettenantrieb verzichtet werden. Typischerweise ist die Transportvorrichtung symmetrisch ausgebildet und weist zwei Laufräder und zwei Steigbeine auf, welche über einen zentralen Antrieb angetrieben werden, dessen Antriebswelle an ihren Enden jeweils mit einem Kurbelarm drehfest verbunden ist, und diese Kurbelarme treiben synchron die Steigbeine an.

Zur Überwindung einer Treppenstufe wird die Transportvorrichtung an eine Setzstufe der Treppenstufe herangefahren, bis die Laufräder an der Setzstufe anliegen, und je nach Anordnung wird das Gestell zur Treppenstufe hin geneigt. In einem ersten Takt werden die Steigbeine nach unten bewegt und übernehmen beim Erreichen der an die Treppenstufe angrenzenden Bodenfläche, d. h. der Trittstufe, die Last von den Laufrädern. Beim weiteren Abwärtsbewegen, d. h. Ausfahren der Steigbeine, wird das Gestell mitsamt der Laufräder angehoben. Anschließend werden die Laufräder abwärtsbewegt, bis sie auf der nächst höheren Trittstufe einer Treppenstufe aufsetzen und die Last wieder von den Steigbeinen übernehmen. In einem zweiten Takt werden die Steigbeine eingezogen, d. h. aufwärts bewegt. Die Transportvorrichtung kann an eine weitere, sich anschließende Treppenstufe herangefahren bzw. herangerollt werden und diese entsprechender Weise überwinden.

Bei einem Absteigevorgang werden die Bewegungsabläufe des Aufsteigevorgangs in umgekehrter Reihenfolge durchgeführt. Bei der erfindungsgemäßen Transportvorrichtung vollführen die Steigbeine lineare Bewegungen, welche durch eine rotatorische Bewegung bzw. - Bewegungen der Kurbelarme bewirkt werden. Beim Auf- bzw. Absteigevorgang findet jeweils ein Lastwechsel zwischen den Laufrädern und den Steigbeinen statt. Die Steighöhe ist der mittels der Transportvorrichtung zu überwindende Hubweg und entspricht der Höhendifferenz zwischen einem unteren Auftrittspunkt und einem oberen Auftrittspunkt des bzw. der Steigbeine. Bei einem Auf- bzw. Absteigevorgang an einer Treppe entspricht die Steighöhe der Höhe der zu überwindenden Treppenstufe bzw. der Höhe der Setzstufe.

In einer bevorzugten Ausführungsform der Transportvorrichtung ist die Laufradachse der Laufräder von der Antriebsachse des Antriebs beabstandet. Weiter ist es vorteilhaft, die Antriebsachse auf gleicher Höhe oder unterhalb der Laufradachse vorzusehen. Hieraus ergibt sich der Vorteil, dass der Abstand der Laufradachse zum Fußende, d. h. zum freien Ende des bzw. der Steigbeine verkürzt wird.

Vorteilhafterweise ist das Steigbein an ein entlang des Führungsabschnitts linear verschiebbares Führungselement angelenkt. Das Führungselement ist schlittenartig ausgebildet und entlang des Führungsabschnitts frei bewegbar. Alternativ kann das Steigbein an eine entlang des Führungsabschnitts geführte Rolle angelenkt sein. Zudem kann der Führungsabschnitt als Führungsbahn mit einer oder mehreren Führungsrollen ausgebildet sein.

In bevorzugter Weise weist die Treppensteigeinrichtung einen Elektromotor bzw. einen Elektromotor mit angekoppeltem Getriebe auf. Zur Stromversorgung des Elektromotors ist typischerweise eine Akkumulatoreinheit vorgesehen. Zum Antrieb mehrerer Steigbeine ist es jedoch auch denkbar, eine kombinierte Antriebsanordnung mit mehreren Elektromotoren auszubilden. Zweckmäßigerweise ist der gesamte Antrieb bzw. die Antriebsanordnung für das bzw. die Steigbeine in einem Gehäuse angeordnet.

In einer bevorzugten Ausführungsform der erfindungsgemäßen Transportvorrichtung weist das Steigbein an seinem Fußende einen Stützfuß und/oder eine Stützrolle auf. Das Steigbein wird bei einem mittels der Transportvorrichtung durchgeführten Auf- bzw. Absteigevorgangs auf eine Treppenstufe aufgesetzt. Der Stützfuß kann als Dämpfungselement beim Aufsetzen des Steigbeins auf einer Treppenstufe bzw. einer Bodenfläche dienen und als elastisches Formteil, bevorzugt als Gummipuffer, und/oder als Federelement ausgebildet sein. Die Elastizität und die Form eines als Dämpfungselements wirkenden Stützfußes wird entsprechend der auszuführenden Dämpfung, insbesondere der abzudämpfenden bzw. der abzufedernden Last, gewählt und gewährleistet, dass sich die Steigbeine auf einer Trittstufe rutschfest abstützen können.

Vorteilhafterweise ist an der Transportvorrichtung zumindest eine selbsttätige Bremse für zumindest ein Laufrad vorgesehen, insbesondere wobei die Bremse als Klemmkörperbremse ausgebildet ist. Alternativ kann die Bremse als Reibkörperbremse oder als elektromagnetische Bremse ausgebildet sein. Die zumindest eine Bremse wird beim Absteigevorgang relevant, da diese beim Anführen an eine Kante derart einfällt bzw. einrastet, dass das Laufrad blockiert wird und nicht weiter über die Kante geführt bzw. gefahren werden kann. Dies erleichtert die Bedienung der Transportvorrichtung, da eine Bedienperson nicht die Tiefe einer Trittstufe bei der Bedienung der Treppensteigeinrichtung berücksichtigen, mit anderen Worten nicht abschätzen muss. Dies übernimmt der in die Treppensteigeinrichtung integrierte selbsttätige Bremsmechanismus.

Eine weitere bevorzugte Ausführungsform der erfindungsgemäßen Transportvorrichtung ist **dadurch gekennzeichnet, dass** das Steigbein durch die Anlenkung des Kurbelarms in einen oberen Steigbeinabschnitt und in einen unteren Steigbeinabschnitt unterteilt ist, und dass der obere Steigbeinabschnitt länger oder gleich lang wie der untere Steigbeinabschnitt ist. Hieraus ergibt sich der Vorteil kleinerer Auslenkwinkel und kürzerer Distanzen, was sich für eine Bedienperson durch geringere Lastwechsel an den Griffen bemerkbar macht.

Im Sinne der Erfindung umfasst der Begriff Laufrad jede zum horizontalen Verfahren bzw. Verschieben der Transportvorrichtung ausgebildete und geeignete Einrichtung, der Begriff Steigbein umfasst jede zum vertikalen Anheben bzw. Absenken der Transportvorrichtung ausgebildete und geeignete Einrichtung.

Besonders vorteilhaft ist es, wenn die Antriebsachse unterhalb der Laufradachse ausgebildet ist, d. h. die Antriebsachse weist einen kurzen Abstand zur angrenzenden Trittstufe auf. Die Anlenkung der Kurbelarme an die Steigbeine ist dabei so gewählt, dass jedes der Steigbeine in einen langen oberen und in einen kurzen unteren Steigbeinabschnitt unterteilt wird. Diese Maßnahme führt zu einem ruckfreien gleichmäßigen Ab- und Aufsteigeverhalten der erfindungsgemäßen Transportvorrichtung.

Weitere Vorteile und Merkmale der Erfindung ergeben sich aus der Beschreibung und den Figuren der Zeichnung. Ebenso können die vorstehend genannten und die noch weiter aufgeführten Merkmale erfindungsgemäß jeweils einzeln oder in beliebigen Kombinationen miteinander verwendet werden. Die in den Figuren gezeigten Merkmale sind rein schematisch und nicht maßstäblich zu verstehen.

### Es zeigen:

- Fig. 1: ein Ausführungsbeispiel der erfindungsgemäßen Transport-vorrichtung;
- Fig. 2a - 2d: die Transportvorrichtung in unterschiedlichen Positionen während eines an einer Treppe durchgeführten Aufsteigevorgangs, wobei die Transportvorrichtung in einem Schnitt zwischen Antriebswelle und einem Kurbelarm gezeigt ist; und
- Fig. 3a + 3b: die Transportvorrichtung in zwei unterschiedlichen Positionen während eines an der Treppe durchgeführten Absteigevorgangs.

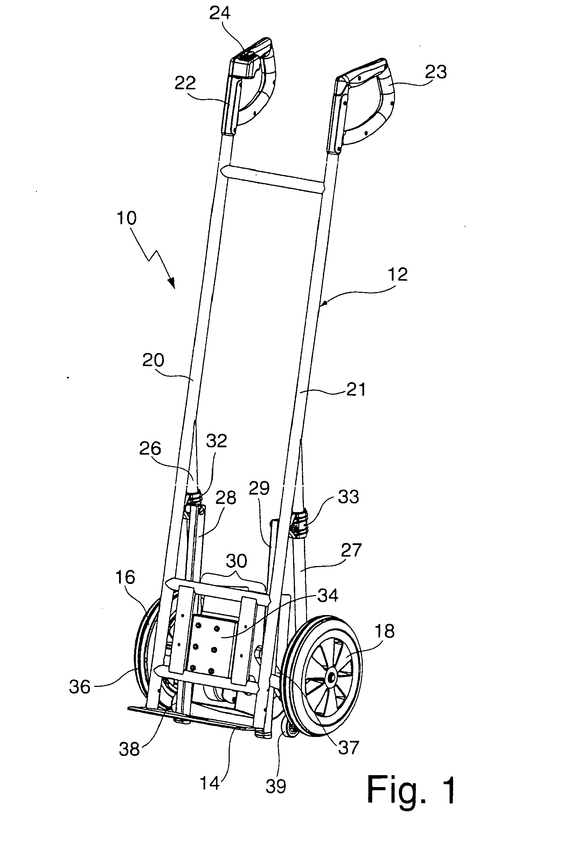

In Figur 1 ist in perspektivischer Darstellung eine Transportvorrichtung 10 mit einem Gestell 12 dargestellt. Am bodenseitigen Ende des Gestells 12 ist eine Auflage 14 zur Aufnahme von Lasten sowie ein Laufrad 16 und ein weiteres Laufrad 18 angeordnet. Die Ausgestaltung des Gestells 12 der sackkarrenähnlich ausgebildeten Transportvorrichtung 10 wird im Wesentlichen durch einen Holm 20 und einen weiteren Holm 21 bestimmt. An dem dem bodenseitigen Ende entgegengesetzten Ende sind ein Griff 22 und ein weiterer Griff 23 an den Holmen 20, 21 befestigt. Die Griffe 22, 23 sind als Handgriffe für eine die Transportvorrichtung betätigende Bedienperson (nicht gezeigt) ausgebildet. Am Griff 22 ist ein Betätigungselement 24 vorgesehen. Das Gestell 12 mit den Holmen 20, 21 kann aus Leichtmetallrohren oder aus Leichtmetallvollmaterial gefertigt sein, wie z. B. aus Aluminium.

Das Gestell 12 weist weiter einen starr mit dem Holm 20 verbundenen Führungsabschnitt 26 und einen starr mit dem weiteren Holm 21 verbundenen weiteren Führungsabschnitt 27 auf. Diese Führungsabschnitte 26, 27 aus stangenförmigem Material, wie die Holme 20, 21, sind fest mit den Holmen 20, 21, bevorzugt materialschlüssig, verbunden. Weiter sind an der Transportvorrichtung 10 ein Steigbein 28 und ein weiteres Steigbein 29 vorgesehen, welche Teil einer Treppensteigeinrichtung 30 sind. Das Steigbein 28 ist an ein Führungselement 32, welches entlang des Führungsabschnitts 26 linear verschiebbar ist, angelenkt. In entsprechender Weise ist das weitere Steigbein 29 über ein weiteres Führungselement 33 entlang des weiteren Führungsabschnitts 27 geführt. Die Treppensteigeinrichtung 30 wird über einen Antrieb 34, welcher einen Elektromotor umfasst, angetrieben. Der Antrieb 34 bzw. der Elektromotor können von der Bedienperson über das Betätigungselement 24 bedarfsgerecht gesteuert werden. Bei einem Auf- bzw. Absteigevorgang wird die Transportvorrichtung 10 von der Bedienperson an den Griffen 22, 23 gehalten und der Antrieb 34 für die Treppensteigeinrichtung 30 über das Betätigungselement 24 betätigt. An der Transportvorrichtung 10 sind zudem eine Bremse 38 für das Laufrad 16 und eine weitere Bremse 39 für das weitere Laufrad 18 vorgesehen. Das Gestell 12 den Holmen 20, 21 kann aus Leichtmetallrohren oder aus Leichtmetallvollmaterial gefertigt sein, wie z. B. Aluminium.

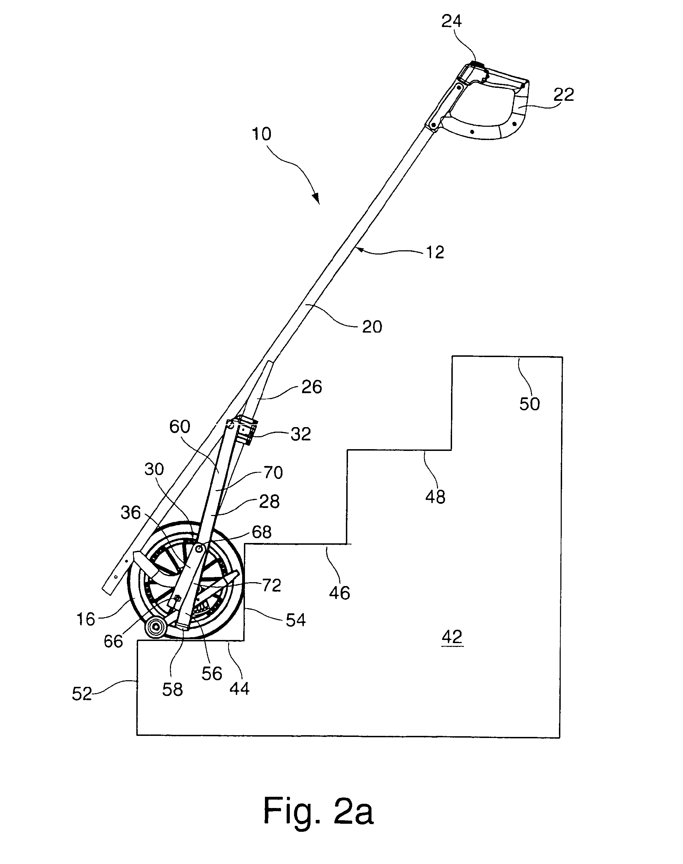

In den Figuren 2a bis 2d ist in einer Schnittdarstellung gezeigt, wie die Transportvorrichtung 10 einen Aufsteigevorgang an einer Treppe 42 durchführt. In Figur 2a sitzt die Transportvorrichtung 10 mit dem Laufrad 16 auf einer ersten Trittstufe 44 der Treppe 42 auf. An die erste Trittstufe 44 schließen sich eine zweite Trittstufe 46, eine dritte Trittstufe 48 und eine vierte Trittstufe 50 an. Eine der ersten Trittstufe 44 zugeordnete erste Setzstufe 52 ist von der Transportvorrichtung 10 bereits überwunden worden. Das auf der ersten Trittstufe 44 aufliegende Laufrad 16 liegt an der der zweiten Trittstufe 46 zugeordneten zweiten Setzstufe 54 an. Das Gestell 12 ist derart zur Treppe 42 ausgerichtet, dass eine die Transportvorrichtung 10 bedienende Bedienperson die Transportvorrichtung 10 am Griff 22 stabil halten kann. Dabei steht die Bedienperson beispielsweise auf der vierten Trittstufe 50 oder auf einer sich an die vierte Trittstufe 50 anschließenden Bodenfläche. Über das Betätigungselement 24 kann die Bedienperson die Treppensteigeinrichtung 30 betätigen.

Das Steigbein 28 weist an einem Fußende 56 einen Stützfuß 58 auf. Der Stützfuß 58 ist bevorzugt aus einem gummi- und/oder zähelastischen Material gefertigt. In einem dem Fußende 56 entgegengesetzten Endbereich 60 ist das Steigbein 28 an das Führungselement 32 angelenkt. Das Führungselement 32 ist linear entlang des Führungsabschnitts 26 verschieb- bzw. bewegbar. An das Steigbein 28 ist der Kurbelarm 36 angelenkt, der einerseits drehfest mit einer Antriebswelle 66 des (in Figur 2a nicht gezeigten) Antriebs und andererseits mit dem Steigbein 28 über eine Anlenkung 68, die das Steigbein 28 in einen oberen und unteren Steigbeinabschnitt 70, 72 unterteilt, verbunden ist.

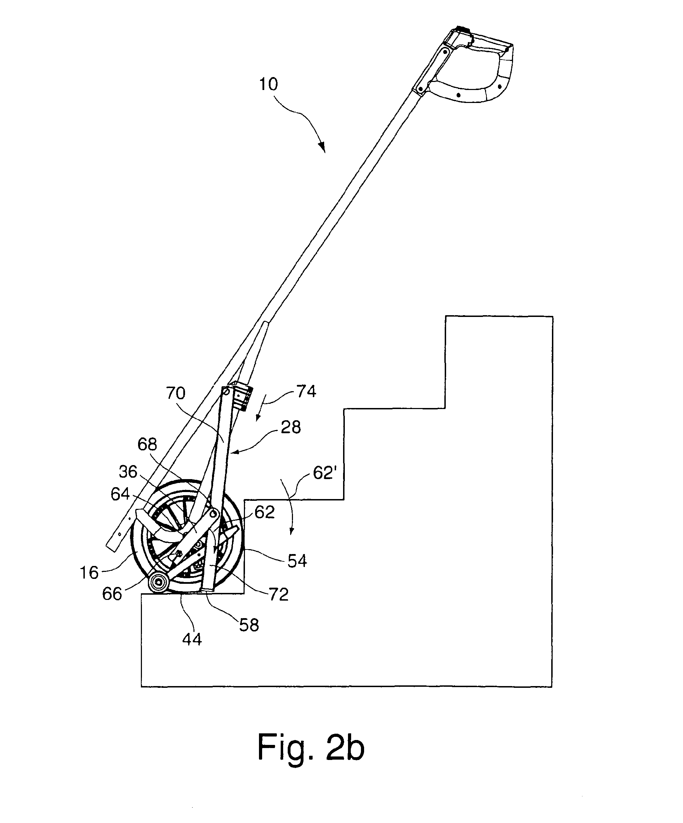

In Figur 2b ist die Transportvorrichtung 10 in einer Stellung gezeigt, in der das Steigbein 28 mit dem Stützfuß 58 auf der ersten Trittstufe 44 aufsitzt. Beim Aufsteigevorgang vollführt der Kurbelarm 36 eine Aufwärtsdrehbewegung 62, 62'. In Figur 2b ist die Laufradachse 64 oberhalb der Antriebsachse 66 des Antriebs angeordnet. Zudem wird durch die Anlenkung 68 des Kurbelarms 36 am Steigbein 28 dieses in den oberen Steigbeinabschnitt 70 und in den unteren Steigbeinabschnitt 72 unterteilt, wobei der obere Steigbeinabschnitt 70 länger als der untere Steigbeinabschnitt 72 ist.

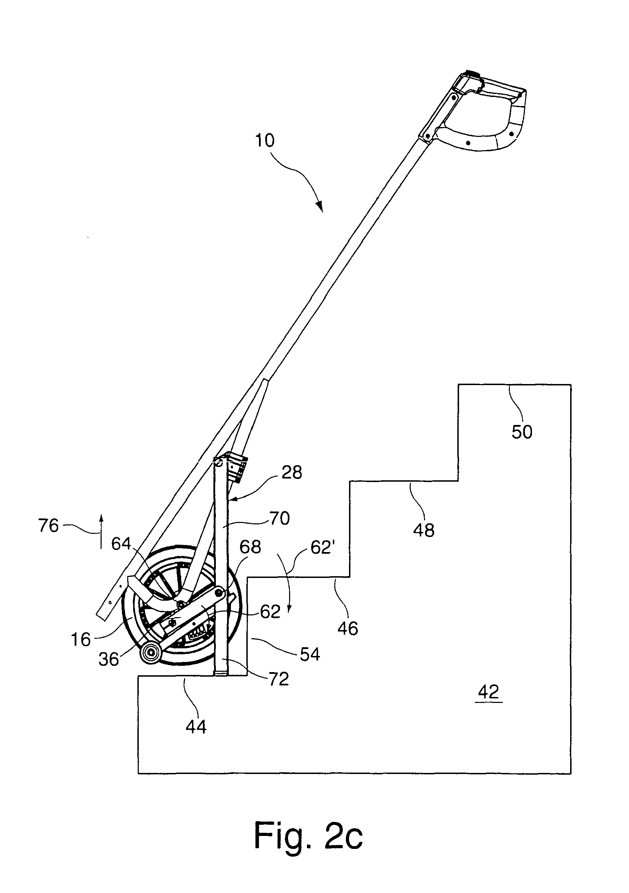

In Figur 2c ist die Transportvorrichtung 10 in einer weiteren, fortgeschritteneren Stellung während des Aufsteigevorgangs gezeigt. Durch die Aufsteigedrehbewegung 62, 62' des Kurbelarms 36 ist das Laufrad 16 sowohl von der ersten Trittstufe 44 als auch der zweiten Setzstufe 54 beabstandet worden. Auf diese Weise vollführt die Transportvorrichtung 10, genauer das Gestell 12, eine Hub- bzw. Aufsteigebewegung 76, wobei eine von der Transportvorrichtung 10 aufgenommene Last angehoben wird. Die Transportvorrichtung 10 ist nur noch über das Steigbein 28, welches über die Anlenkung 78 in den oberen Steigbeinabschnitt 70 und in den unteren Steigbeinabschnitt 72 unterteilt ist, in Kontakt mit der ersten Trittstufe 44 bzw. sitzt auf dieser auf.

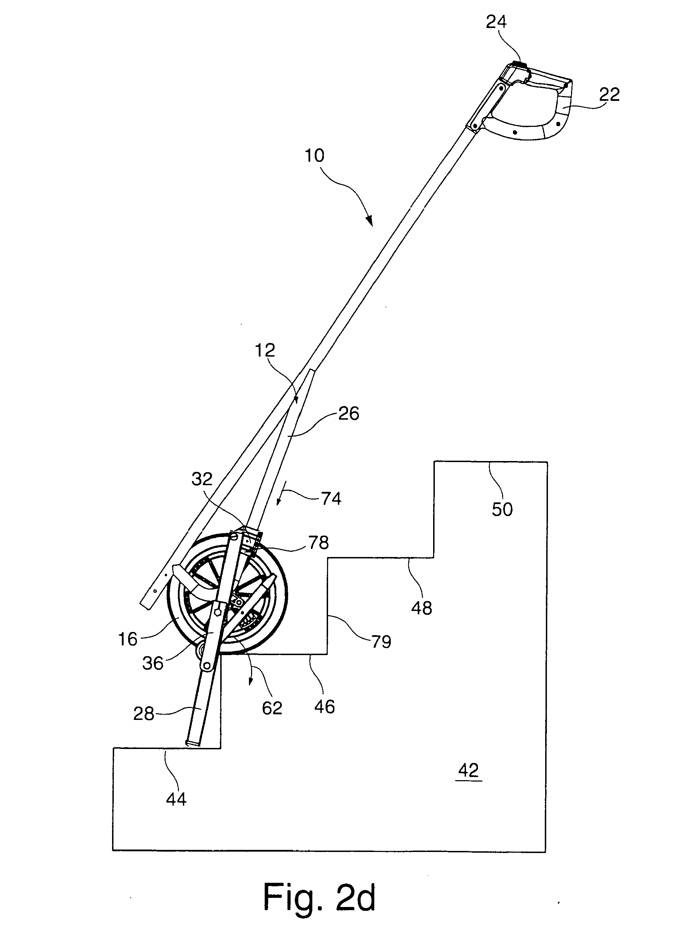

In Figur 2d ist der Aufsteigevorgang nahezu vollständig durchgeführt. Das Steigbein 28 befindet sich in seiner maximalen ausgefahrenen Stellung, sodass das Führungselement 32 am unteren Ende 78 des Führungsabschnitts 26 anliegt. Durch eine lineare Verfahrbewegung 74 ist das Führungselement 32 in diese in der Figur gezeigten Stellung gelangt. Das Laufrad 16 liegt auf der zweiten Trittstufe 46 auf. Der Kurbelarm 36 ist in der gezeigten Stellung parallel zum Steigbein 28 ausgerichtet. Durch eine weitere Aufsteigedrehbewegung 62 des Kurbelarms 36 wird das Steigbein 28 von der ersten Trittstufe 44 abgehoben, mit anderen Worten nach oben in seine eingefahrene Stellung verfahren. Das Laufrad 16 liegt zwischenzeitlich auf der Trittstufe 46 auf und wird durch die Bedienperson entlang der zweiten Trittstufe 46 bis zur dritten Setzstufe 79 verfahren.

In Wiederholung des in den Figuren 2a - 2d gezeigten Aufsteigevorgangs kann die Transportvorrichtung 10 von der zweiten Trittstufe 46 auf die dritte Trittstufe 48 gehoben bzw. versetzt werden. Weiter kann die Transportvorrichtung 10 von der dritten Trittstufe 48 auf die vierte Trittstufe 50 angehoben bzw. versetzt werden, sodass insgesamt die gesamte Treppe 42 von der Transportvorrichtung 10 überwunden werden kann.

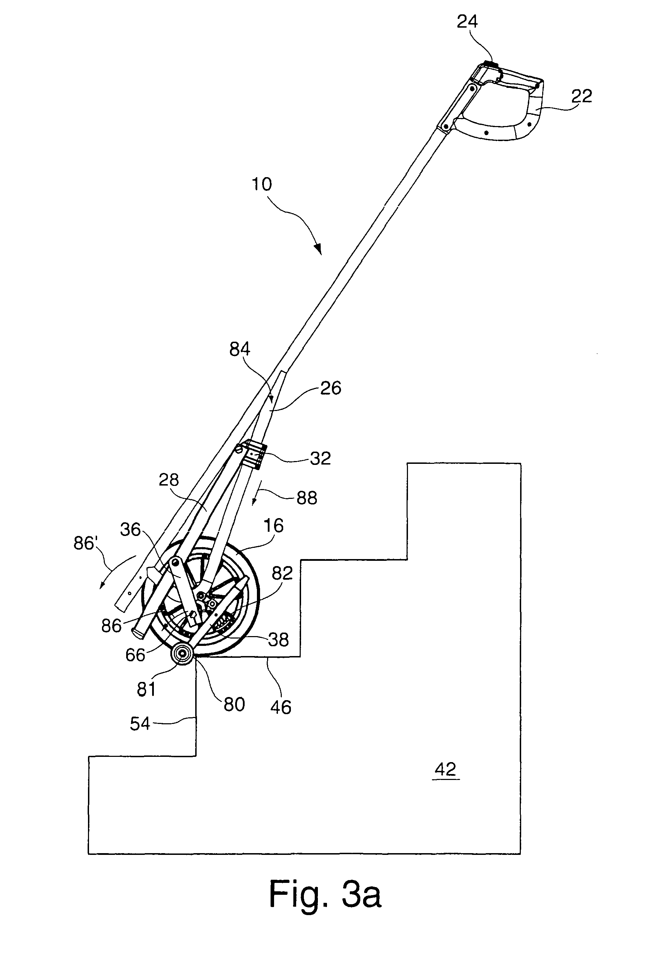

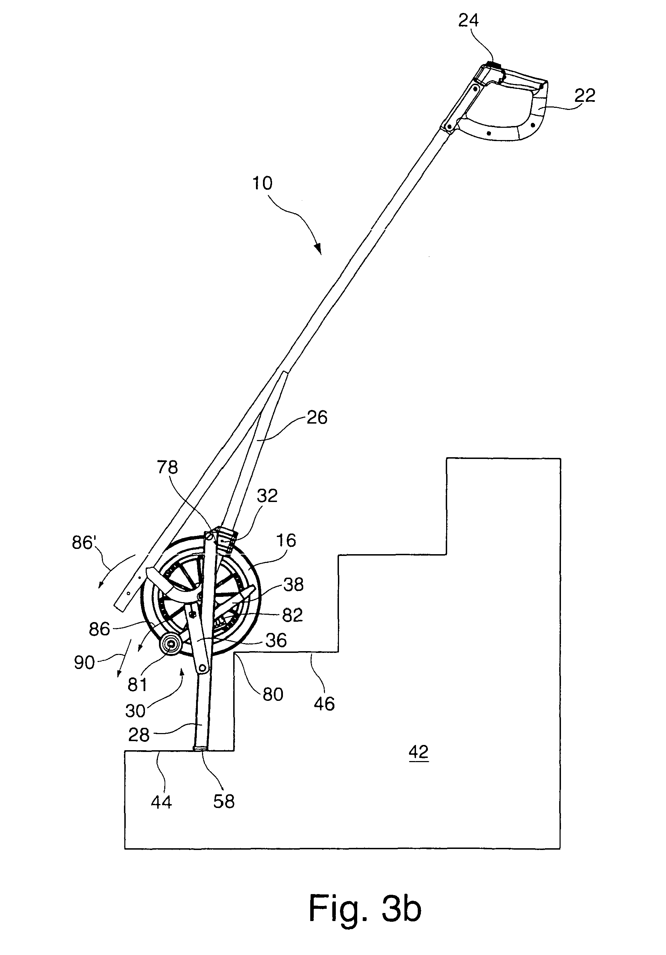

In den Figuren 3a und 3b ist in Schnittdarstellung ein mithilfe der Transportvorrichtung 10 an der Treppe 42 durchgeführter Absteigevorgang gezeigt. In Figur 3a sitzt die Transportvorrichtung 10 am vorderen Ende der zweiten Trittstufe 46 bzw. an der zwischen der zweiten Trittstufe 46 und der zweiten Setzstufe 54 angeordneten Kante 80 auf. Durch Überschreiten bzw. Überrollen der Kante 80 ist ein an der Bremse 38 vorgesehenes Aktivierungselement 81 selbsttätig ausgelöst worden, sodass die Bremse 38 ausgelenkt wurde und ein Klemmelement 82, welches das Laufrad 16 blockiert, verschoben hat. Das Steigbein 28 ist aus der eingefahrenen Stellung, in welcher das Führungselement 32 am oberen Ende 84 des Führungsabschnitts 26 anliegt, bereits herausgeführt worden. Durch eine Absteigedrehbewegung 86, 86' des Kurbelarms 36 um die Antriebswelle 66 wurde eine entsprechende Bewegung des Steigbeins 28 in Verbindung mit einer Absteigelinearbewegung 88 des Führungselements 32 bewirkt.

Durch eine weitere Absteigedrehbewegung 86, 86' des Kurbelarms 36 erreicht die Transportvorrichtung 10 die in Figur 3b gezeigte Stellung. Das Steigbein 38 ist in seine ausgefahrene Stellung geführt, d. h. das Führungselement 32 liegt am unteren Ende 78 des Führungsabschnitts 26 an, und das Steigbein 28 sitzt mit dem Stützfuß 58 auf der ersten Trittstufe 44 auf. Weiter ist das Laufrad 16 von der zweiten Trittstufe 46 beabstandet. Dabei liegt das Aktivierungselement 81 der Bremse 38 frei und blockiert weiterhin das Laufrad 16. Durch eine weitere Absteigedrehbewegung 86, 86' des Kurbelarms 36 wird das Laufrad 16 in Auflage mit der ersten Trittstufe 44 gebracht, das Aktivierungselement 81, z.B. eine Laufrolle, liegt ebenfalls auf der Trittstufe 44 auf und hebt die Bremswirkung am Laufrad 16 auf, und das Steigbein 28 wird von der Trittstufe 44 abgehoben (nicht gezeigt).

In einem dem in den Figuren 3a und 3b entsprechenden Absteigevorgang kann die Transportvorrichtung 10 weiter von der ersten Trittstufe 44 heruntergesetzt werden, sodass die gesamte Treppe 42 von der Transportvorrichtung 10 hinabgestiegen werden kann.

An einer Transportvorrichtung 10 mit Laufrädern 16, 18 und einem Gestell 12 zur Aufnahme von Lasten wird über zumindest einen motorisch angetriebenen Kurbelarm 36, der einenends drehfest unmittelbar mit einer Antriebsachse 66 eines motorischen Antriebs 34 verbunden ist und anderenends drehbar an zumindest ein Steigbein 28 angelenkt ist, das Steigbein 28 bewegt. Bei einer Drehbewegung des Kurbelarms 36 wird das Steigbein 28 linear bewegt, wodurch die Transportvorrichtung 10 eine Treppe 42 auf- oder absteigen kann. Dabei sitzt das Steigbein 28 mit seinem Fußende 56 auf dem Boden oder der Treppe 42 bzw. einer Trittstufe 44 auf. An einem dem Fußende 56 entgegengesetzten Ende bzw. Endbereich 60 ist das Steigbein 28 an einem an dem Gestell 12 vorgesehenen Führungsabschnitt 26 drehbar gelagert und linear verfahrbar.

### Bezugszeichenliste:

- 10.: Transportvorrichtung
- 12.: Gestell
- 14.: Auflage
- 16.: Laufrad
- 18.: weiteres Laufrad
- 20.: Holm
- 21.: weiterer Holm
- 22.: Griff
- 23.: weiterer Griff
- 24.: Betätigungselement
- 26.: Führungsabschnitt
- 27.: weiterer Führungsabschnitt
- 28.: Steigbein
- 29.: weiteres Steigbein
- 30.: Treppensteigeinrichtung
- 32.: Führungselement
- 33.: weiteres Führungselement
- 34.: Antrieb
- 36.: Kurbelarm
- 38.: Bremse
- 39.: weitere Bremse
- 42.: Treppe
- 44.: erste Trittstufe
- 46.: zweite Trittstufe
- 48.: dritte Trittstufe

- 50.: vierte Trittstufe
- 52.: erste Setzstufe
- 54.: zweite Setzstufe
- 56.: Fußende
- 58.: Stützfuß
- 60.: Endbereich
- 62.: Aufsteigedrehbewegung
- 64.: Laufradachse
- 66.: Antriebsachse
- 68.: Anlenkung
- 70.: oberer Steigbeinabschnitt
- 72.: unterer Steigbeinabschnitt
- 74.: lineare Verfahrbewegung
- 76.: Aufsteigebewegung
- 78.: unteres Ende
- 79.: dritte Setzstufe
- 80.: Kante
- 81.: Aktivierungselement
- 84.: oberes Ende
- 86.: Absteigedrehbewegung
- 88.: Absteigelinearbewegung
- 90.: Absteigebewegung

## Patentansprüche

1. Transportvorrichtung (10) umfassend ein Gestell (12) zur Aufnahme von Lasten, am Gestell (12) angeordnete Laufräder (16, 18) und eine motorisch angetriebene Treppensteigeinrichtung (30), wobei die Treppensteigeinrichtung (30) zumindest ein Steigbein (28, 29) und zumindest einen motorisch angetriebenen Kurbelarm (36, 37), der einenends drehfest unmittelbar mit einer Antriebsachse (66) eines motorischen Antriebs (34) verbunden ist und anderenends drehbar an das zumindest eine Steigbein (28, 29) angelenkt ist, aufweist, **dadurch gekennzeichnet, dass** das zumindest eine Steigbein (28, 29) in einem einem Fußende (56) entgegengesetzten Endbereich (60) an einem an dem Gestell (12) vorgesehenen Führungsabschnitt (26, 27) drehbar gelagert und linear verfahrbar ist.

2. Transportvorrichtung (10) nach Anspruch 1, **dadurch gekennzeichnet, dass** eine Laufradachse (64) der Laufräder (16, 18) von der Antriebsachse (66) des Antriebs (34) beabstandet ist.

3. Transportvorrichtung (10) nach Anspruch 2, **dadurch gekennzeichnet, dass** die Antriebsachse (66) auf gleicher Höhe oder unterhalb der Laufradachse (64) vorgesehen ist.

4. Transportvorrichtung (10) nach einem der Ansprüche 1 bis 3, **dadurch gekennzeichnet, dass** das Steigbein (28, 29) an ein entlang des Führungsabschnitts (26, 27) linear verschiebbares Führungselement (32, 33) angelenkt ist.

5. Transportvorrichtung (10) nach einem der Ansprüche 1 bis 3, **dadurch gekennzeichnet, dass** das Steigbein (28, 29) an eine entlang des Führungsabschnitts (26, 27) geführte Rolle angelenkt ist.

6. Transportvorrichtung (10) nach einem der vorhergehenden Ansprüche, **dadurch gekennzeichnet, dass** die Treppensteigeinrichtung (30) einen Elektromotor aufweist.

7. Transportvorrichtung (10) nach einem der vorhergehenden Ansprüche, **dadurch gekennzeichnet, dass** das Steigbein (28, 29) an seinem Fußende (56) einen Stützfuß (58) und/oder eine Stützrolle aufweist.

8. Transportvorrichtung (10) nach einem der vorhergehenden Ansprüche, **dadurch gekennzeichnet, dass** an der Transportvorrichtung (10) zumindest eine selbsttätige Bremse (38, 39) für zumindest ein Laufrad (16, 18) vorgesehen ist, insbesondere wobei die Bremse (38, 39) als Klemmkörperbremse ausgebildet ist.

9. Transportvorrichtung (10) nach einem der vorhergehenden Ansprüche, **dadurch gekennzeichnet, dass** das Steigbein (28, 29) durch eine Anlenkung (68) des Kurbelarms (36, 37) in einen oberen Steigbeinabschnitt (70) und in einen unteren Steigbeinabschnitt (72) unterteilt ist, und dass der obere Steigbeinabschnitt (70) länger oder gleich lang wie der untere Steigbeinabschnitt (72) ist.
